# EUROPÄISCHE PATENTSCHRIFT

(11) **EP 1 519 188 B1**
(45) Veröffentlichungstag und Bekanntmachung des Hinweises auf die Patenterteilung: **15.04.2020**
(21) Anmeldenummer: 04029246.8
(22) Anmeldetag: 13.12.2001
(51) Int. Cl.: G01N 21/88, G06T 7/00, G01M 17/02, G01B 21/20, G01B 11/25

(54) **Vorrichtung und Verfahren zur Qualitätsprüfung eines Körpers**
Device and method for quality control of a body
Dispositif et méthode pour contrôler la qualité d'un corps

(30) Priorität: 14.12.2000 DE 10062251
(43) Veröffentlichungstag der Anmeldung: 30.03.2005
(62) Teilanmeldung aus: 01270755.0
(73) Patentinhaber: Fraunhofer-Gesellschaft zur Förderung der angewandten Forschung e.V., 80686 München (DE)
(72) Erfinder: Hassler, Ulf, 91560 Heilsbronn (DE); Schmitt, Peter, 91058 Erlangen (DE); Kostka, Günther, 91056 Erlangen (DE)
(74) Vertreter: Zimmermann, Tankred Klaus

(56) Entgegenhaltungen:
- EP-A- 0 026 621
- WO-A1-00/25088
- JP-A- 63 191 947
- US-A- 4 327 580
- US-A- 4 402 218
- US-A- 5 639 962

## Beschreibung

Die vorliegende Erfindung bezieht sich auf die industrielle Qualitätskontrolle an Produkten mit strukturierten Oberflächen hinsichtlich der Überprüfung auf Fabrikationsfehler und insbesondere auf eine Vorrichtung und ein Verfahren zur Qualitätsüberprüfung eines Körpers mit einer Oberfläche, die eine durch Kanten begrenzte Strukturierung und eine im wesentlichen kantenfreie Unebenheit aufweist.
Bei der industriellen Qualitätskontrolle an Produkten mit schwach strukturierten (reliefartigen) Oberflächen hinsichtlich der Überprüfung auf Fabrikationsfehler, die sich durch eine spezifische Anomalie der Oberflächenformung abzeichnen, können berührungslose Echtzeit-Vermessungsverfahren eingesetzt werden. Insbesondere bei der Charakterisierung von Fahrzeugreifen auf Seiten- oder Höhenschlag ist es wesentlich, Beulen oder Einschnürungen einerseits und Aufschriften bzw. auf den Reifen aufgebrachte Markierungen andererseits zu erkennen, damit sie nicht die Charakterisierung des Fahrzeugreifens stören.
Die besondere Schwierigkeit bei der Detektion von Seiten- oder Höhenschlag besteht darin, daß auf den zu prüfenden Flächen in der Regel gleichzeitig erhabene, reliefartige Schrift- oder Markierungszeichen aufgebracht sind, und daß die Anomaliestruktur im gleichen oder niedrigeren Höhenintervall liegt wie die Schrift, wobei die zu prüfenden Reifenoberfläche zusätzlich eine torusförmige Krümmung aufweisen kann.

Dies hat zur Folge, daß die korrekte Vermessung der Höhenanomalie durch die Anwesenheit der Schriftstrukturen verfälscht und in vielen Fällen sogar verhindert wird.

Bei der Produktion von Fahrzeugreifen kann es zu Herstellungsfehlern beim inneren Aufbau kommen, die die mechanischen Eigenschaften und dadurch das Betriebsverhalten signifikant beeinflussen. Eine Aussonderung solcher Produkte ist notwendig. Derartige Produktionsfehler können bei Fahrzeugreifen an den Seiten- oder Laufflächen auftreten und äußern sich in der Regel durch Abweichungen gegenüber einer radialsymmetrischen Oberfläche. Die Ausdehnungen solcher Störungen sind im allgemeinen höher als die gleichzeitig vorhandenen konstruktiven Strukturen auf der Oberfläche wie Schrift- oder Markierungsreliefs.

Bisher werden für diese Prüfaufgabe im industriellen Bereich vorwiegend kapazitive Meßverfahren eingesetzt, die jedoch aufgrund der im folgenden genannten Gründe nur eine unbefriedigende Prüftiefe leisten können. Während der Bewegung der Oberfläche, d. h. während einer Drehung des Reifens, wird über eine Änderung der Kapazität eines Meßsensors eine Abstandsänderung zwischen der Meßelektrode und der Reifenoberfläche ermittelt. Der Abstand liegt in seiner geometrisch bedingten relativ groben lateralen Ortsauflösung, die zur Folge hat, daß nur eine geringe Anzahl von Spuren pro Breite des Prüfbereichs sinnvoll zu vermessen ist. Das Meßsignal enthält keine ausreichende Information über den genauen Verlauf einer Höhenauslenkung, so daß anwesende kurzreichweitige Strukturen (Relief oder Beulen/Einschnürungen) nicht unterscheiden und für die weitere Berechnung entsprechend ausgeblendet werden können.

Daneben werden von bestimmten Reifen-Herstellern taktile (berührende) Meßverfahren eingesetzt, die jedoch bestimmte Bedingungen an die Geometrie der Meßobjekte stellen. Die Einschränkung besteht darin, daß auf der zu untersuchenden Oberfläche eine explizite Meßspur vorgesehen werden muß, die keinerlei konstruktive Strukturen aufweisen darf und deren Mindestbreite die Geometrie des Meßfühlers und mögliche Ungenauigkeiten beim Rundlauf während der Aufnahme beinhalten muß. Die Meßmethode ist unter diesen Umständen in der Lage, relativ zuverlässige Meßwerte zu ermitteln. Allerdings stellt sie aufgrund der geometrischen Einschränkungen und die dagegen stehende derzeitige Tendenz zu sehr schmalen Reifenseitenflanken (Niederquerschnittreifen) keine befriedigende Meßmethode für den allgemeinen Einsatz dar.

Eine bekannte Methode zur Vermessung von Oberflächenkonturen ist die optische Triangulation. Dabei wird ein Lichtstrahl (i. allg. ein Laserstrahl) auf die zu vermessende Oberfläche fokussiert und die diffus reflektierte Strahlung optisch auf einem Sensor mit einer Vielzahl von Bildelementen (Pixeln) abgebildet. Bleibt die Geometrie zwischen Kamera und Lichtstrahl unverändert, so kann aus einer Verschiebung des projizierten Lichtpunktes auf der Sensorfläche die Veränderung der räumlichen Lage des Lichtschnittpunktes auf dem zu vermessenden Objekt entlang des Strahls ermittelt werden. Eine solche Messung ist zunächst punktuell. Soll ein ganzer Bereich geprüft werden, so wird das Prüfobjekt unter der Triangulator-Meßanordnung hindurchbewegt und die Meßwerte in schneller Folge aufgezeichnet, so daß eine schmale kreisförmige Spur auf der Reifenseitenfläche erfaßt wird.

In jüngster Zeit mit der zunehmenden Verfügbarkeit leistungsfähiger Laserlichtquellen und optischer Sensoren werden Beulen-Prüfsysteme auf der Basis der Lasertriangulation angeboten. Diese Systeme sind in der Lage, räumlich hochaufgelöst eine bestimmte Meßspur auf der Reifenoberfläche aufzunehmen und auf potentielle Formanomalien hin zu bewerten. Da jedoch diese Verfahren konstruktive Schriftstrukturen nicht zuverlässig erkennen können, wird die Höhe der Formanomalien um die Höhe der regulären Schriftstrukturen verfälscht. Hinzu kommt das Problem, daß die maximale Amplitude etwaiger auftretender Formanomalien nicht notgedrungen auf der gewählten Meßspur liegt.

Eine ebenfalls bekannte Weiterentwicklung der beschriebenen Triangulation, ist die Abtastung der Oberfläche mittels Fächerstrahl und Flächensensor (Lichtschnittverfahren). Über den auf den Sensor projizierten Lichtstrich (Schnittlinie zwischen Fächerstrahl und Objektoberfläche) kann die Höheninformation entlang der Meßlinie auf der Oberfläche ermittelt werden. Durch Bewegung des Objekts wird zeilenweise die Höheninformation entlang dieser Linie aufgezeichnet und anschließend zu einem vollständigen 2D-Höhenbild mit der entsprechenden Höheninformation in jedem Bildpunkt zusammengesetzt. Bei hinreichender räumlicher und zeitlicher Auflösung der Messung enthält der so erzeugte Datensatz die Höheninformation aus einem gesamten Oberflächenbereich einschließlich der Fehler- sowie Schrift- bzw. Markierungsstrukturen. Da allerdings Schrift- und Fehlerstrukturen im selben Höhenbereich liegen und diese Strukturen zudem auf einer im Verhältnis zu diesen Strukturen stark gekrümmten Oberfläche liegen, ist es auch mittels der so gewonnenen Höhenbilder ohne spezielle Datenverarbeitungsmethoden nicht möglich, auf einfache Art und Weise eine sichere Unterscheidung zwischen den betreffenden Reliefstrukturen zu erzielen.

Die WO 00/25088 A1 offenbart Verfahren und Vorrichtungen zur Ermittlung von Unebenheiten in einer gewölbten Oberfläche, wie z. B. einer Reifenseitenwand, unter Verwendung einer Bandpassfilterung. Insbesondere wird von der Reifenseitenwand eine dreidimensionale Oberflächendarstellung erzeugt. Hierauf wird die Wölbung aus der dreidimensionalen Darstellung der Oberfläche extrahiert, und die Kanten der Strukturierung, wie z. B. einer Schrift oder von Markierungszeichen, werden geglättet, um eine wölbungslose Darstellung der gewölbten Oberfläche zu erhalten. Die Oberfläche enthält nun noch die potentiell vorhandene Unebenheit, wie z. B. eine Einschnürung oder eine Beule auf der Reifenseitenwand, die Kanten der Aufschrift sind jedoch nun geglättet. Anschließend wird die wölbungslose Darstellung mit einer Schwelle verglichen, um flächige Bereiche der wölbungslosen Darstellung zu ermitteln, die eine vorbestimmte Beziehung zu dem Schwellenwert haben. Schließlich werden die Flächen der ermittelten Bereiche beurteilt, wobei ein Bereich als Unebenheit erfaßt wird, wenn seine Fläche größer als eine vorbestimmte Fläche ist. Die reliefartigen Schriftstrukturen auf dem Reifen spielen bei dem Beurteilen der Flächen im wesentlichen keine Rolle mehr, da die Kanten dieser Aufschriften geglättet worden sind, und damit die Höhen der Aufschriften derart reduziert worden sind, daß sie überhaupt nicht mehr über dem Schwellenwert sind, oder daß sie lediglich noch eine kleine Fläche über dem Schwellenwert haben. Diese kleinen Flächen können bei der Beurteilung der Flächengröße über dem Schwellenwert ohne weiteres von den Flächen unterschieden werden, welche auf Beulen oder Einschnürungen zurückgehen. Bevorzugterweise wird zum Extrahieren der Oberfläche und zum Glätten der Kanten ein Bandpaßfilter verwendet, das eine obere und eine untere Grenzfrequenz hat, wobei die untere Grenzfrequenz so eingestellt ist, daß die Wölbung unterdrückt wird, und wobei die obere Grenzfrequenz so eingestellt wird, daß die Kanten geglättet werden, während die Unebenheiten als Beulen oder Einschnürungen im wesentlichen nicht beeinträchtigt werden.

Obwohl dieses Verfahren bereits wesentliche Vorteile gegenüber eindimensional arbeitenden Meßverfahren bringt, bestehen auch hier gewisse Einschränkungen in punkto Prüffähigkeit, insbesondere bezüglich der maximal zulässigen Höhenausdehnung der konstruktiven Strukturen, also der durch Kanten begrenzten Strukturierungen auf dem Prüfobjekt. Für eine sichere Fehlererkennung muß sichergestellt sein, daß die Schriftstrukturen höchstens die gleiche Höhe besitzen wie die zu detektierenden Fehlerstrukturen. Nicht selten ist eine Aufschrift, also eine durch Kanten begrenzte Soll-Strukturierung, wesentlich höher als der zu ermittelnde Fehler in Form von Beulen oder Einschnürungen. Bei der Erkennung von wesentlich kleineren Fehlerstrukturen als Schriftstrukturen, und auch für den Fall, daß die Schriftstrukturen zwar im gleichen Höhenbereich aber deutlich lateral ausgedehnt sind, ist keine sichere Unterscheidung zwischen kantenfreien Unebenheiten und durch Kanten begrenzten Strukturierungen mehr möglich. Da die Strukturierungen durch Tiefpaß-Filtern ausgeblendet werden sollen, wird eine sichere Ausblendung nur sichergestellt, wenn die Strukturierung nicht zu hoch und nicht zu groß sind. Wird jedoch eine zu hohe bzw. zu große Strukturierung geglättet, so wird aus ihr, nach der Tiefpaßfilterung, eine gewissermaßen künstlich erzeugte im wesentlichen kantenfreie Unebenheit, welche fälschlich für eine Beule gehalten werden kann. Haben die Strukturierungen eine negative Höhenausdehnung, wie sie beispielsweise durch einen Stempel, der in die Reifenoberfläche gedrückt ist, auftreten kann, so könnte dieser Stempel fälschlicherweise als Einschnürung angesehen werden, da er, nach dem Tiefpaßfiltern, keine scharfen Kanten mehr hat, jedoch nicht so stark unterdrückt worden ist, daß seine Tiefe kleiner ist als die für Einschnürungen vorbestimmte kritische Tiefe.

Die EP 0 026 621 A2 offenbart eine Vorichtung und ein Verfahren zum Testen einer Formabweichung einer Reifenseitenwand. Hierzu werden Wandlersonden neben der Seitenwand des zu testenden Reifens positioniert. Ausgangssignale der Wandlersonden, die erzeugt werden, während der Reifen gedreht wird, werden in eine Signalverarbeitungsschaltung eingespeist, die ein Ausgangssignal liefert, das eine Unregelmäßigkeit in der Kontur der Seitenwand ausgibt, wenn eine Unregelmäßigkeit mit einer vorbestimmten Ausdehnung eine vorbestimmte Zeitdauer lang erfasst wird. Insbesondere wird das Ausgangssignal eines Wandlers in eine elektronische Differenzier-Schaltung eingespeist. Ein Fenster-Komparator vergleicht das Ausgangssignal aus der Differenzier-Schaltung mit vorausgewählten Pegeln, die sich auf maximal tolerable Positionsänderungsraten beziehen. Wenn diese Pegel überschritten werden, wird ein Ausgangssignal erzeugt Die Aufgabe der vorliegenden Erfindung besteht darin, eine verbesserte Vorrichtung und ein verbessertes Verfahren zur Qualitätsüberprüfung eines Körpers mit einer Oberfläche zu schaffen, die eine durch Kanten begrenzte Strukturierung und eine im wesentlichen kantenfreie Unebenheit aufweist.

Diese Aufgabe wird durch eine Vorrichtung nach Patentanspruch 1 oder durch ein Verfahren nach Patentanspruch 17 gelöst.

Der vorliegenden Erfindung liegt die Erkenntnis zugrunde, daß eine wesentliche Verbesserung bei der Qualitätsüberprüfung erreicht wird, wenn vorhandene Soll-Strukturierungen, die sich durch scharfe Kanten auszeichnen, nicht geglättet werden, um sie zu unterdrücken, sondern daß die Kanteneigenschaft direkt dazu ausgenützt wird, die Strukturierungen als Soll-Strukturierungen zu erkennen und zu markieren, so daß von diesen Strukturierungen von vorneherein gesagt werden kann, daß sie keine Fehlergebiete sind. Im Gegensatz zum bekannten Verfahren, bei dem die Soll-Strukturierungen geglättet wurden, und zwar in der Hoffnung, daß sie so weit unterdrückt werden, daß sie bei der Detektion von Beulen oder Einschnürungen nicht mehr auftauchen, wird erfindungsgemäß der entgegengesetzte Weg eingeschlagen. Es wird nicht mehr der Versuch unternommen, die Sollstrukturierungen zu unterdrücken, sondern die Soll-Strukturierungen werden beim Untersuchen der Oberfläche des Körpers hinsichtlich potentieller Fehlergebiete erkannt und als Soll-Strukturen deklariert. Hierzu wird eine Höhendarstellung der Oberfläche des zu untersuchenden Körpers erzeugt, wobei die Höhendarstellung noch die Strukturierung und die Unebenheit umfaßt. Hierauf wird eine Variationsdarstellung aus der Höhendarstellung berechnet, wobei die Variationsdarstellung an Punkten der Höhendarstellung den Punkten zugeordnete Variationen der Höhendarstellung umfaßt, so daß an einer Grenze der durch Kanten begrenzten Strukturierung eine hohe Variation erhalten wird, während an einer Grenze der Unebenheit eine geringe Variation erhalten wird. Schließlich werden Bereiche der Höhendarstellung erfaßt, die eine Variation aufweisen, die betragsmäßig kleiner als ein vorbestimmter Variations-Schwellenwert ist, und deren Höhe oder Tiefe größer als ein vorbestimmter Detektionsschwellenwert ist, um potentiell qualitätsbeeinträchtigende Bereiche zu erhalten.

Nachdem die durch Kanten begrenzten Strukturierungen aufgrund der scharfen Kanten an ihrer äußeren Begrenzung eine hohe Variation haben, werden sie bei der erfindungsgemäßen Schwellwertentscheidung als nicht-qualitätsbeeinträchtigende Bereiche erkannt und somit gezielt ausgeschlossen.

Ein Vorteil der vorliegenden Erfindung besteht darin, daß nunmehr keine Einschränkungen mehr bezüglich der Größe und Höhe der Strukturierungen bzw., anders ausgedrückt, bezüglich der Höhe und Größe der zu detektierenden Mängel des Körpers, die sich als kantenfreie Unebenheiten äußern, bestehen.

Ein weiterer Vorteil der vorliegenden Erfindung besteht darin, daß aufgrund der sichereren Detektion Fehldetektionen ausgeschlossen werden, d. h. es werden keine Körper mehr als fehlerhaft eingestuft, die in Ordnung sind bzw. es werden im wesentlichen keine Körper mehr als in Ordnung eingestuft, die fehlerhaft sind.

Ein weiterer Vorteil der vorliegenden Erfindung besteht darin, daß dieselbe somit zu einem günstigeren Endpreis des Körpers beiträgt, da weniger Fehldetektionen stattfinden und auf eine manuelle Endkontrolle ganz verzichtet werden kann, oder, wenn dennoch eine manuelle Endkontrolle stattfindet, diese Endkontrolle mit wesentlich weniger Personal besetzt werden muß, da aufgrund der sichereren Detektion weniger Kontrollaufwand besteht.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Blockschaltbild gemäß einem bevorzugten Ausführungsbeispiel einer erfindungsgemäßen Vorrichtung zur Qualitätsüberprüfung eines Körpers mit einer Oberfläche;
- Fig. 2: eine Ausgestaltung der Einrichtung zum Erzeugen einer Höhendarstellung der Oberfläche des Körpers gemäß einem bevorzugten Ausführungsbeispiel der vorliegenden Erfindung; und
- Fig. 3a und 3b: einen Algorithmus zur Qualitätsüberprüfung eines Körpers gemäß einem bevorzugten Ausführungsbeispiel der vorliegenden Erfindung.

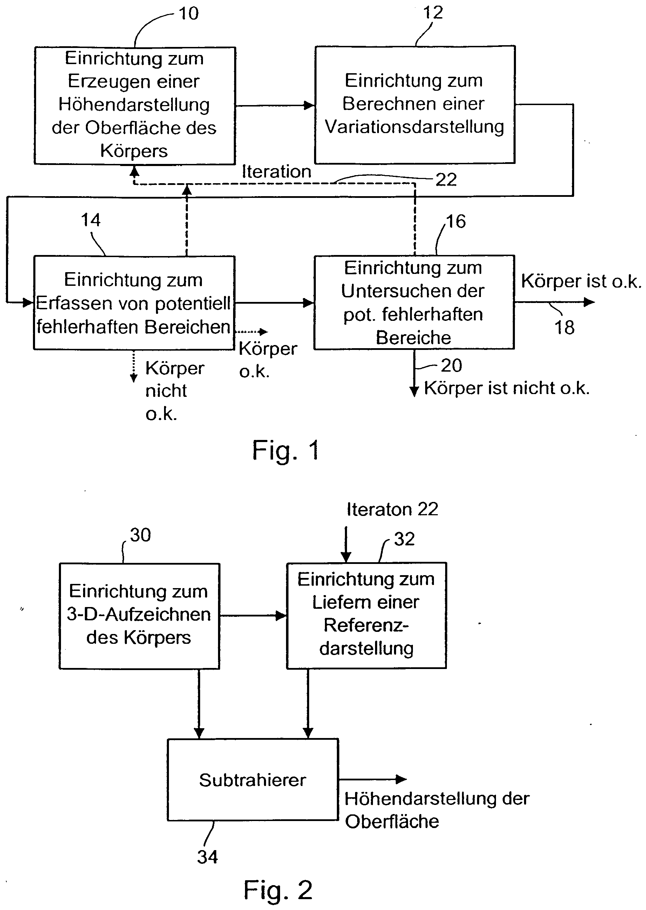

Fig. 1 zeigt ein Blockschaltbild gemäß einem bevorzugten Ausführungsbeispiel einer erfindungsgemäßen Vorrichtung zur Qualitätsüberprüfung eines Körpers mit einer Oberfläche, die eine durch Kanten begrenzte Strukturierung und eine im wesentlichen kantenfreie Unebenheit aufweist. Bevorzugterweise wird die erfindungsgemäße Vorrichtung zur Qualitätsüberprüfung von Fahrzeugreifen eingesetzt. In diesem Fall umfassen die durch Kanten begrenzten Strukturierungen Aufschriften, Firmenembleme, die erhaben über der Oberfläche des Reifens sind, oder aber Einstempelungen und dergleichen, also Strukturierungen, die gewissermaßen unterhalb der Oberfläche des Fahrzeugreifens sind, also durch Kanten begrenzte Vertiefungen. Die im wesentlichen kantenfreien Unebenheiten sind beispielsweise Beulen oder Einschnürungen. Es ist bekannt, daß eine Beule mit einer bestimmten Form auf einen Schaden innerhalb des Reifens hinweist. Dasselbe gilt für Einschnürungen, also Vertiefungen in der Reifenoberfläche. Solche durch Mängel des Körpers hervorgerufenen Störungen der Oberfläche des Reifens haben prinzipbedingt keine scharfen Kanten. Auch wenn bestimmte Beulen oder Einschnürungen beispielsweise aufgrund ihrer Plazierung am Reifen oder bezüglich ihrer Form und Höhe bzw. Tiefe keine funktionalen Mängel des Reifens anzeigen, können sie doch unerwünscht sein, da sie den optischen Gesamteindruck des Reifens beeinträchtigen, welcher für viele Käufer genauso wichtig ist wie die technische Funktion des Reifens oder sogar bei bestimmten Käuferschichten noch wichtiger ist.

Die erfindungsgemäße Vorrichtung umfaßt zunächst eine Einrichtung zum Erzeugen einer Höhendarstellung der Oberfläche wobei die Einrichtung zum Erzeugen der Höhendarstellung der Oberfläche ausgebildet ist, um die Höhendarstellung der Oberfläche so zu erzeugen, dass die Höhendarstellung der Oberfläche die Strukturierung und die Unebenheit umfasst. Wird das erfindungsgemäße Verfahren nicht auf eine gewölbte Oberfläche angewendet, wie sie beispielsweise bei einer Reifenseitenflanke vorliegt, sondern wird das erfindungsgemäße Verfahren zur Qualitätsüberprüfung irgendeiner Oberfläche verwendet, die beispielsweise eben sein könnte, so wird durch die Einrichtung zum Erzeugen einer Höhendarstellung der Oberfläche einfach eine Aufnahme der Oberfläche gemacht. Die zweidimensional angeordneten Pixel der Oberfläche geben hinsichtlich ihrer Farbinformation ein Graustufenbild der Oberfläche. Jede Graustufe würde damit eine bestimmte Höhe z. B. hinsichtlich eines absoluten Bezugspunkts oder aber hinsichtlich einer mittleren Höhe der Oberfläche darstellen, so daß negative Höhenwerte z. B. durch hellgraue Farbtöne gekennzeichnet werden, während positive Höhenwerte durch dunkelgraue Farben dargestellt werden.

Die Einrichtung 10 zum Erzeugen einer Höhendarstellung der Oberfläche des Körpers ist mit einer Einrichtung 12 zum Berechnen einer Variationsdarstellung aus der Höhendarstellung gekoppelt, wobei die Variationsdarstellung an Punkten der Höhendarstellung den Punkten zugeordnete Variationen der Höhendarstellung umfaßt, so daß an einer Grenze der Strukturierung eine hohe Variation erhalten wird, während an einer Grenze der Unebenheit eine geringere Variation erhalten wird. Eine scharfe Kante wird sich, wenn das Beispiel des Graustufenbilds beibehalten wird, durch eine schnelle Änderung der Grautöne manifestieren, während die kantenfreie Unebenheit durch eine langsame Änderung der Grautöne von einem Pixel zum nächsten gekennzeichnet ist. Die Variationsdarstellung stellt somit die erste Ableitung der Höhendarstellung dar. Bei zweidimensional betrachteten Oberflächen wird hierfür eine Ableitung in x- und eine Ableitung in y-Richtung erforderlich sein. So könnte die Variationsdarstellung für jeden Punkt zwei Gradienten umfassen.

An dieser Stelle sei darauf hingewiesen, daß der Ausdruck "Gradient" einen Vektor bezeichnet, dessen Betrag gleich dem Steigungswert ist, und dessen Richtung gleich der Richtung der Steigung ist. Der Ausdruck "Variation" umfaßt hingegen lediglich den Betrag des Gradientenvektors, ist also ein skalarer Wert und berechnet sich beispielsweise aus der Summe der Differenzenquadrate benachbarter Bildpunkte. Im Sinne der vorliegenden Anmeldung soll der Ausdruck "Variation" derart verstanden werden, daß er auch einen Gradienten umfaßt und insbesondere jeglichen Wert, der eine Aussage hinsichtlich eines Höhenunterschieds zwischen benachbarten Pixeln liefert. Die Variation eines Pixels berechnet sich beispielsweise aus der Summe der Differenzenquadrate zwischen dem betrachteten Pixel, für das die Variation berechnet wird, und sämtlichen z. B. acht benachbarten Pixeln. Selbstverständlich sind auch andere Berechnungsmethoden denkbar, wie z. B. die Berücksichtigung von weniger als acht, wie z. B. vier, benachbarten Pixeln etc. Die Variation muß nur irgendwie angeben, ob eine Höhenänderung von einem Pixel zu einem anderen Pixel vorhanden ist.

Es hat sich jedoch herausgestellt, daß es ausreichend ist, Gradienteninformationen dahingehend zu erzeugen, daß es bekannt ist, daß an einem Pixel eine hohe Abweichung zum nächsten Pixel vorhanden ist, egal, ob diese Abweichung in x- oder y-Richtung auftritt. Die Variationsdarstellung kann ohne weiteres dadurch erzeugt werden, daß jeder Graustufe z. B. eine Zahl zugeordnet wird, und daß die Graustufen-Zahlen benachbarter Pixel subtrahiert werden, wobei die Differenz dann ein Maß für den Gradienten ist. Zum Zusammenfassen der Gradienten in x- und y-Richtung könnte beispielsweise die Summe der erhaltenen Differenzen zusammenaddiert werden.

Alternativ könnte auch lediglich ein zweistufiges Gradienten-Darstellungsverfahren eingesetzt werden, bei dem bestimmt wird, daß, wenn die Differenz oberhalb eines Schwellenwerts ist, angezeigt wird, daß hier ein nennenswerter Gradient vorhanden ist, während, wenn die Differenz zwischen den Graustufenzahlen zweier benachbarter Pixel unterhalb eines Gradienten-Schwellenwerts ist, keine zu berücksichtigende Abweichung vorhanden ist. Alternativ könnte diese Entscheidung nicht nur in zwei Stufen vorgenommen werden, sondern in eine beliebige Anzahl von Stufen quantisiert werden, wobei die kleinste Quantisierung selbstverständlich durch die zur Verfügung stehenden Graustufen gegeben ist.
Die Einrichtung 12 zum Berechnen der Variationsdarstellung ist wiederum mit einer Einrichtung 14 zum Erfassen von potentiell fehlerhaften Bereichen gekoppelt. Die Einrichtung 14 zum Erfassen von Bereichen der Höhendarstellung, die einen Gradienten aufweisen, der betragsmäßig kleiner als ein vorbestimmter Variations-Schwellenwert ist, und deren Höhe größer als ein Detektionsschwellenwert ist, dient dazu, aus der Variationsdarstellung potentiell qualitätsbeeinträchtigende Bereiche zu erhalten. Da es bekannt ist, daß Strukturierungen, wie Aufschriften etc., nicht qualitätsbeeinträchtigend sind, werden gemäß der Erfindung nur die Bereiche in der Variationsdarstellung bzw. Höhendarstellung erfaßt, die durch Gradientenwerte kleiner als ein Variations-Schwellwert umgeben sind. Darüber hinaus wird in der Einrichtung 14 zum Erfassen von potentiell fehlerhaften Bereichen ein Detektionsschwellwert eingesetzt, der die Tatsache berücksichtigt, daß nicht alle Erhebungen bzw. Vertiefungen, also alle möglicherweise vorhandenen Beulen oder Einschnürungen kritisch sind, da sich die kritischen Beulen/Einschnürungen durch eine Höhenabweichung von der nicht-beeinträchtigten Reifenoberfläche auszeichnen. Ist die Höhe einer Beule oder Einschnürung so gering, daß sie vielleicht nur auf eine Unebenheit des Gummis zurückgeht, die weder optisch noch konstruktiv bedenklich ist, so wird auch dieser Bereich, obgleich er einen geringen Gradienten hat, nicht als potentiell qualitätsbeeinträchtigend erfaßt.

Prinzipiell könnte die erfindungsgemäße Qualitätsüberprüfung des Körpers bereits mit der Einrichtung 14 zu Ende sein, da bereits hier eine Aussage über die Qualität des Fahrzeugreifens getroffen werden kann. Wenn nämlich ein potentiell qualitätsbeeinträchtigender Bereich, also ein potentiell fehlerhafter Bereich erfaßt worden ist, könnte eine Ausgabe schon darin bestehen, daß der Körper, z. B. der Reifen, ausgemustert wird und beispielsweise einer manuellen Nachkontrolle unterzogen wird. Wenn die Einrichtung 14 zum Erfassen von Bereichen jedoch überhaupt keinen potentiell qualitätsbeeinträchtigenden Bereich erfaßt hat, da auf dem Reifen nur durch Kanten begrenzte Strukturierungen vorhanden waren, so ist die Qualitätsüberprüfung ebenfalls bereits zum Ende, da der Reifen als "ok" klassifiziert wird.

Um die Anzahl der Fehl-Ausmusterungen, also die Anzahl der Entscheidungen, bei denen ein funktionstauglicher Reifen als fehlerhaft bezeichnet wird, so gering als möglich zu halten, umfaßt ein bevorzugtes Ausführungsbeispiel der vorliegenden Erfindung eine Einrichtung 16 zum Untersuchen der potentiell qualitätsbeeinträchtigenden Bereiche der Höhendarstellung hinsichtlich Höhe oder Tiefe des Bereichs und/oder Fläche des Bereichs, um eine tatsächlich qualitätsbeeinträchtigende Unebenheit zu erfassen, um den Reifen dann auszumustern. Bei einem bevorzugten Ausführungsbeispiel wird daher erst die Einrichtung 16 die Entscheidung treffen, ob der Körper in Ordnung ist (Zweig 18), oder ob der Körper nicht in Ordnung ist (Zweig 20).

Bei dem bevorzugten Ausführungsbeispiel der vorliegenden Erfindung, bei dem die Einrichtung 16 zum Untersuchen der durch die Einrichtung 14 als potentiell fehlerhaft erfaßten Bereiche vorhanden ist, kann eine Iteration 22 dahingehend durchgeführt werden, daß die Arbeitsweise der Einrichtung zum Erzeugen einer Höhendarstellung der Oberfläche des Körpers, die in Fig. 1 mit dem Bezugszeichen 10 bezeichnet ist, entscheidend verbessert wird, wenn die Einrichtung 10 zum Erzeugen einer Höhendarstellung der Oberfläche des Körpers derart ausgeführt ist, daß sie die in Fig. 2 gezeigten Komponenten umfaßt.

Fig. 2 stellt ein bevorzugtes Ausführungsbeispiel der Einrichtung 10 zum Erzeugen einer Höhendarstellung (Fig. 1) dar. Insbesondere gibt es bei der Untersuchung von Fahrzeugreifen bzw. allgemein bei der Qualitätsüberprüfung von Körpern mit gewölbten Oberflächen ein Problem dahingehend, daß die Wölbung der Oberfläche von vorneherein nicht bekannt ist.

Damit kann in einem solchen Fall nicht ohne weiteres eine einfache Höhenschwelle eingesetzt werden, um die potentiell fehlerhaften Bereiche zu erfassen. Statt dessen wird bei dem bevorzugten Ausführungsbeispiel der vorliegenden Erfindung folgendermaßen vorgegangen. Zunächst wird mittels einer Einrichtung 30 zum dreidimensionalen Aufzeichnen des zu untersuchenden Körpers ein dreidimensionales Bild erzeugt, das im Falle eines Reifens sowohl die durch Kanten begrenzten Strukturierungen als auch die im wesentlichen kantenfreien Unebenheiten aufweist. Da der Reifen an seiner Seitenflanke eine Wölbung hat, umfaßt die durch die Einrichtung 30 erzeugte Darstellung auch die Wölbung des Reifens und zusätzlich noch, falls vorhanden, einen Seitenschlag des Reifens. Um eine Höhendarstellung der Oberfläche zu erzeugen, die nur noch die Strukturierung und die Unebenheit aufweist, wird aus der dreidimensionalen Darstellung der Oberfläche des Körpers eine Referenzdarstellung erzeugt, welche nicht die Soll-Strukturierungen und ferner nicht die kantenfreien Unebenheiten aufweist.

Hierzu wird bei einem Ausführungsbeispiel der vorliegenden Erfindung eine eindimensionale langreichweitige nicht-lineare Filterung durchgeführt, wobei die langreichweitige Filterung als Tiefpaß verstanden werden kann, welcher die langsamen Variationen, wie z. B. Wölbung und Seitenschlag, nicht beeinträchtigt, welcher jedoch die mittleren Variationen, wie z. B. die durch die Unebenheit hervorgerufenen Variationen und natürlich auch die schnellen Variationen, die durch die Strukturierung hervorgerufen wird, unterdrückt. Diese Referenzdarstellung, die durch die Einrichtung 32 erzeugt wird, wird dann mittels eines Subtrahierers 34 von der ursprünglichen dreidimensionalen Aufzeichnung abgezogen, so daß eine ebene Höhendarstellung der Oberfläche entsteht, die keinen Seitenschlag mehr und insbesondere auch keine Wölbung der Oberfläche mehr enthält. Dann kann mittels einer einfachen Höhenschwelle in der Einrichtung 14 zum Erfassen von potentiell fehlerhaften Bereichen, die in Fig. 1 gezeigt ist, gearbeitet werden.

Wie es bereits angesprochen worden ist, kann eine Iteration stattfinden, um eine bessere Höhendarstellung der Oberfläche zu erreichen. Wenn beispielsweise, wie bei einem bevorzugten Ausführungsbeispiel der vorliegenden Erfindung, im ersten Durchlauf der Iteration eine langreichweitige nicht-lineare Filterung zur Erzeugung des Referenzhöhenbildes (Einrichtung 32 in Fig. 2) durchgeführt worden ist, so können bei bestimmten großen Schriftstrukturen dennoch Reste der Schriftstrukturen verbleiben. In der Einrichtung 14 zum Erfassen von potentiell fehlerhaften Bereichen (Fig. 1) wurde jedoch bereits eine Untersuchung der Variationsdarstellung durchgeführt. Wenn die Untersuchung der Variationsdarstellung dahingehend erweitert wird, daß nicht nur die durch die Einrichtung 14 ermittelten potentiell fehlerhaften Bereiche gesucht werden, sondern auch die Schriftstrukturen ermittelt werden, wenn nämlich die Gradientenwerte oberhalb des Schwellenwerts gesucht werden, so können die potentiell fehlerhaften Bereiche und die zusätzlich zu detektierenden Schriftstrukturen einfach von der dreidimensionalen Darstellung, die durch die Einrichtung 30 erzeugt worden ist, eliminiert werden. Damit wird eine lückenhafte dreidimensionale Darstellung des Körpers erhalten, welche nur noch die Wölbung und den Seitenschlag umfaßt. Wenn diese lückenhafte Darstellung dann subtrahiert oder durch analytische Funktionen, welche an die verbleibenden Stützstellen der lückenhaften Bereiche angefittet werden, wieder aufgefüllt wird, kann die Struktur- und Vertiefungs-lose Referenzdarstellung völlig ohne Schrift und Vertiefungen erhalten werden. Nach dem Subtrahieren mittels des Subtrahierers 34 verbleiben nur noch die kantenbegrenzten Strukturierungen und die im wesentlichen kantenfreien Unebenheiten, ohne daß irgendwelche Beeinträchtigungen durch eine nicht hundertprozentige Unterdrückung mittels des langreichweitigen Filters, der im ersten Durchlauf in der Einrichtung 32 verwendet wird, stattgefunden hat. Daran anschließend können die Einrichtungen 12, 14 und 16 erneut, mit der nun jedoch neu erzeugten Höhendarstellung arbeiten, um erneut potentiell fehlerhafte Bereiche zu markieren, und um erneut die potentiell fehlerhaften Bereiche zu untersuchen. Durch Vergleich des Ergebnisses hinsichtlich der potentiell fehlerhaften Bereiche oder der tatsächlich als fehlerhafte Bereiche festgestellten Bereiche am Ende der zweiten Iteration mit den entsprechenden Ergebnissen am Ende der ersten Iteration kann festgestellt werden, ob die Iteration überhaupt noch Änderungen gebracht hat. Wenn die Iteration Änderungen gebracht hat, so war die langreichweitige Filterung im Block 32 offenbar nicht hundertprozentig in Ordnung. Wenn jedoch zwischen den beiden Iterationsergebnissen keine wesentlichen Unterschiede mehr festzustellen sind, so war die langreichweitige Filterung, die zum Liefern einer Referenzdarstellung eingesetzt worden ist, offenbar effektiv beim Unterdrücken der Vertiefungen und Kantenstrukturen. Die Iteration kann so oft wiederholt werden, bis keine bedeutsamen Änderungen von Iteration zu Iteration festgestellt werden. Als Entscheidungskriterium, ob die Iteration nunmehr abgebrochen werden soll, kann ein prozentuales oder absolutes Änderungsmaß von einer Iteration zur nächsten Iteration eingesetzt werden.

An dieser Stelle sei darauf hingewiesen, daß die Einrichtung zum Liefern einer Referenzdarstellung somit in einer ersten Iteration eine langreichweitige Tiefpaßfilterung des zu untersuchenden Körpers durchführen kann. Im nächsten I-terationsschritt findet dann vorzugsweise eine erneute Filterung der Artefakt-bereinigten Höhendarstellung des Reifens statt, nachdem die detektierten Strukturierungen und die potentiell fehlerhaften Bereiche aus der dreidimensionalen Darstellung des Körpers entfernt wurden, um eine lückenhafte Darstellung zu erhalten, und die Lücken der lückenhaften Darstellung durch Interpolation aufgefüllt wurden. Damit wird eine Referenzdarstellung des Reifens ohne Vertiefungen und Strukturierungen erhalten, damit die Höhendarstellung der Oberfläche immer ebener und somit immer besser auswertbar wird.

Alternativ könnte die Referenzdarstellung jedoch auch von einer Datenbank stammen. Wenn beispielsweise immer die Reifen eines Herstellers überprüft werden, so könnte der Hersteller einen Reifen ohne Aufschrift herstellen, der manuell genau auf Beulen und Einschnürungen überprüft worden ist, um dann diesen Reifen dreidimensional zu vermessen, so daß die dreidimensionale Darstellung dieses "Referenzreifens" als Referenzdarstellung eingesetzt werden kann. Dieses Verfahren wird dann gut funktionieren, wenn die Abweichungen von Reifen zu Reifen klein sind. Dieses Verfahren wird auch effizient funktionieren, wenn eine große Serie von "identischen" Reifen zu untersuchen ist.

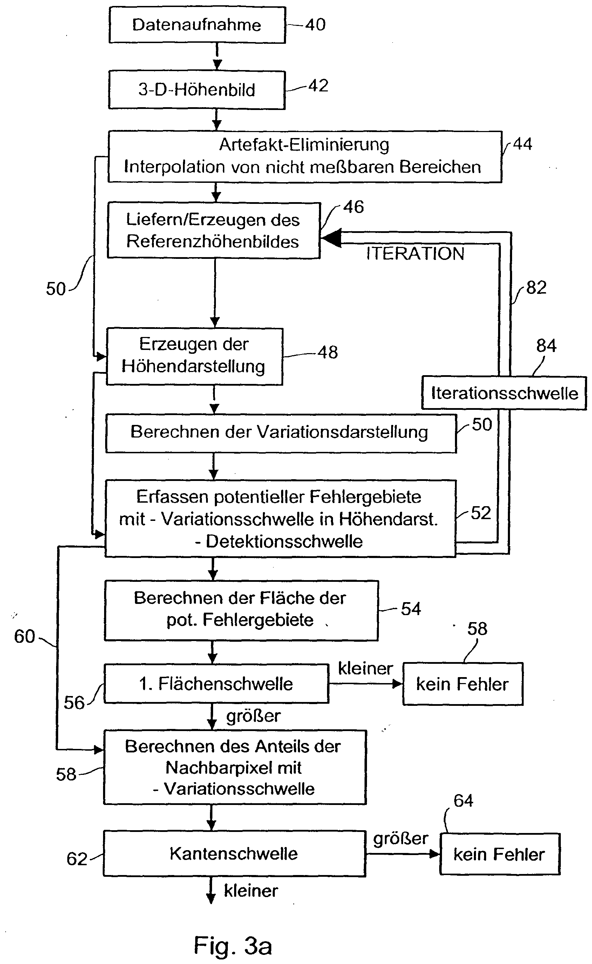

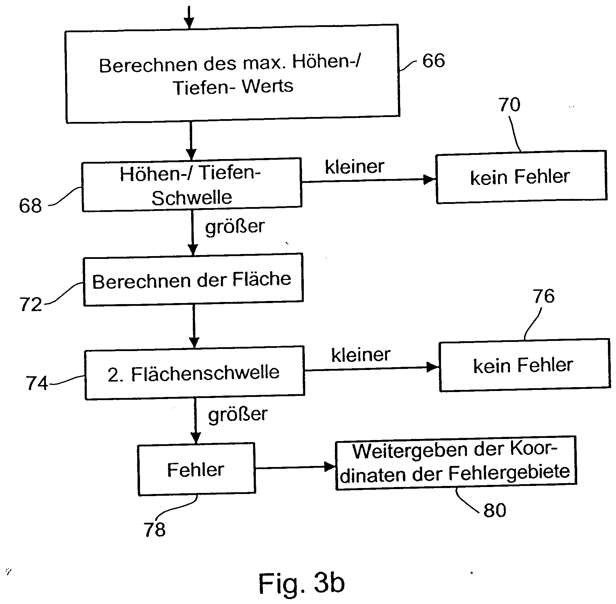

Im nachfolgenden wird auf die Fig. 3a und 3b Bezug genommen, um ein bevorzugtes Ausführungsbeispiel des erfindungsgemäßen Verfahrens zur Erkennung von Beulen/Einschnürungen oder allgemein gesagt von im wesentlichen kantenfreien Unebenheiten auf bzw. in einer Oberfläche eines Körpers, beispielsweise eines Reifens, darzustellen. In einem Schritt 40 wird eine Datenaufnahme des Reifens durchgeführt, auf die nachfolgend eingegangen wird. Anschließend wird in einem Schritt 42 ein dreidimensionales Höhenbild z. B. der Reifenseitenwand erzeugt. In einem Schritt 44 wird dann eine Eliminierung von nicht-meßbaren Bereichen durch Interpolation zwischen Nachbarbereichen sowie eine Verwerfung von extremen Höhenwerten zur Artefaktvermeidung durchgeführt. Extreme Höhenwerte entstehen beispielsweise durch Meßfehler oder aber durch punktartige Gummiaustriebe, die auf neuen Reifen vorhanden sind, und die selbstverständlich kein Problem hinsichtlich der Funktion oder Optik des Reifens darstellen.

Anschließend wird, wie es anhand von Fig. 1 bzw. von Fig. 2 bereits ausgeführt worden ist, in einem Schritt 46 ein Referenzhöhenbild entweder extern von einer Datenbank geliefert oder anhand des untersuchten Körpers erzeugt. Das Referenzhöhenbild sollte ein möglichst strukturloses Referenzhöhenbild der Objektwölbung sein, was bevorzugterweise durch eindimensionale langreichweitige nicht-lineare Filterung über einen einstellbaren Objektbereich (Winkelbereich) in tangentialer Richtung, also in Umfangsrichtung, des Reifens bewirkt wird.

In einem Schritt 48 wird anschließend ein ebenes Reifenhöhenbild erzeugt, in dem nur noch Beulen (Einschnürungen) und Schrift, aber kein Seitenschlag und keine Wölbung mehr vorhanden sind. Dies wird durch Subtraktion (Einrichtung 34 von Fig. 2) der Referenzdarstellung von der dreidimensionalen Darstellung des Körpers erreicht. Hierzu wird, wie es durch einen Nebenpfeil 50 in Fig. 3a dargestellt ist, das Artefakt-gefilterte dreidimensionale Höhenbild verwendet. Aus der Höhendarstellung, die durch den Schritt 48 erzeugt wird, wird anschließend eine Variationsdarstellung berechnet (Schritt 50), wie es im vorstehenden erläutert worden ist. Anschließend werden potentielle Fehlergebiete in einem Schritt 52 erfaßt. Dies geschieht vorzugsweise durch Bestimmung und Zusammenfassung von Gebieten in der Höhendarstellung, die durch den Schritt 48 erhalten wurde, wobei Gebiete zusammengefaßt werden, deren Höhen (dargestellt durch Graustufen) höher (oder tiefer) als die Detektionsschwelle sind, und deren Variation gleichzeitig unter der Variationsschwelle liegen.

Optional können diese Fehlergebiet noch mit einem nicht-linearen zweidimensionalen Filter bearbeitet werden, um Artefakte bzw. geringfügige Fehlergebiete bereits an dieser Stelle zu eliminieren. Als potentielle Fehlergebiete werden somit Gebiete erfaßt, die sich relativ langsam aus dem Reifen erheben bzw. sich in den Reifen hinein vertiefen, und die eine bestimmte Höhe haben. Um Größenordnungen zu geben, sei darauf hingewiesen, daß Reifen derart genau untersucht werden, daß bereits Beulen bzw. Einschnürungen erfaßt werden sollen, deren Höhe über der Oberflächen bzw. deren Tiefe unter der Oberfläche im Bereich von 0,3 mm liegt. Typischerweise werden Beulen oder Einschnürungen als kritisch empfunden, deren Höhe bzw. Tiefe 0,6 mm oder darüber beträgt. Durch die Detektionsschwelle, die im Schritt 52 verwendet wird, kann somit die Empfindlichkeit der Detektion eingestellt werden. Wird die Detektionsschwelle sehr hoch eingestellt, so werden nur relativ wenig potentiell qualitätsbeeinträchtigende Gebiete erfaßt, während, wenn die Detektionsschwelle sehr niedrig eingestellt wird, eine Vielzahl von potentiell qualitätsbeeinträchtigenden Fehlern erzeugt wird. Es sei darauf hingewiesen, daß die Detektionsschwelle auch auf Null eingestellt werden kann, so daß das erfindungsgemäße Konzept lediglich zu einer Gradientenerfassung degradiert. Dann werden alle Bereiche der Oberfläche des Reifens erfaßt, die einen Gradienten unterhalb eines bestimmten Werts haben. Die potentiell qualitätsbeeinträchtigenden Gebiete sind dann alle Gebiete des Reifens, auf denen keine Schrift bzw. Strukturierung mit scharfen Kanten vorhanden ist. In dieser Betrachtung wird davon ausgegangen, daß Schriftbereiche nicht qualitätsbeeinträchtigend sind, während alle anderen Bereiche des Reifens mit einem gewissen Gradienten qualitätsbeeinträchtigend sein können. Es sei darauf hingewiesen, daß ebene Reifenflächen keinen Gradienten haben, so daß diese nicht als potentiell qualitätsbeeinträchtigend erfaßt werden.

An dieser Stelle sei darauf hingewiesen, daß im Schritt 52 von einer pixelweisen Verarbeitung, die in den vor dem Schritt 52 beschriebenen Schritten stattgefunden hat, in eine gebietsweise Bearbeitung übergegangen wird. Bei einem bevorzugten Ausführungsbeispiel der vorliegenden Erfindung findet sich datenverarbeitungsmäßig am Ausgang des Schritts 52 keine Pixeldarstellung mehr, sondern eine Liste von potentiell fehlerhaften Gebieten, die jedoch durch ihre Eigenschaften und Koordinaten eindeutig der ursprünglichen dreidimensionalen Darstellung des Reifens zuordenbar sind. Am Ende des Verfahrens, wenn einer der Bereiche, der in der Liste von potentiell qualitätsbeeinträchtigenden Bereichen aufgeführt ist, als qualitätsbeeinträchtigend klassifiziert wird, kann somit gesagt werden, an welcher Stelle des Reifens die Qualitätsbeeinträchtigung ist, damit eine Person, die eine manuelle Qualitätskontrolle durchführt, unmittelbar zu der problematischen Stelle an dem Reifen geführt wird.

Bei dem in Fig. 3a gezeigten bevorzugten Ausführungsbeispiel der vorliegenden Erfindung wird in einem Schritt 54 eine Flächenberechnung der durch den Schritt 52 erhaltenen Gebiete, welche potentielle Fehlergebiete sind, durchgeführt. In einem Schritt 56 werden die berechneten Flächen mit einer vorbestimmten ersten Flächenschwelle verglichen. Wird festgestellt, daß die Fläche eines potentiellen Fehlergebiets kleiner als die Flächenschwelle ist, so bedeutet dies, daß dieses Fehlergebiet aufgrund seiner kleinen Ausdehnung unkritisch ist, daß bei diesem potentiellen Fehlergebiet somit kein Fehler vorliegt (58). Wird jedoch festgestellt, daß die Fläche eines potentiellen Fehlergebiets größer als die Flächenschwelle ist, so wird dieses Fehlergebiet weiterhin in der Liste von potentiellen Fehlergebieten gehalten. Das potentielle Fehlergebiet, bei dem festgestellt worden ist, daß es unproblematisch ist, wird dagegen aus der Liste von potentiell qualitätsbeeinträchtigenden Gebieten eliminiert.

In einem Schritt 58 wird eine weitere Untersuchung der noch verbliebenen potentiellen Fehlergebiete durchgeführt. Insbesondere wird der prozentuale Anteil der Nachbarpixel der potentiellen Fehlergebiete, die entweder im Schritt 52 berechnet wurden, oder die nach dem Schritt 56 noch verblieben sind, berechnet, die eine hohe Variation, d. h. einen hohen Gradienten aufweisen. Hierzu wird die Variationsdarstellung von Schritt 50 verwendet, wie es durch einen Pfeil 60 dargestellt ist. Für Gebiete, deren prozentualer Anteil der Nachbarpixel mit hoher Variation oberhalb einer sogenannten Kantenschwelle ist (Schritt 62), werden dennoch als Strukturierung erkannt und als nicht-fehlerhaft klassifiziert (64). Ist dagegen der prozentuale Anteil der Nachbarpixel des betreffenden Gebiets kleiner als die im Block 62 verwendete vorbestimmte Kantenschwelle, so kann davon ausgegangen werden, daß hier keine durch Kanten begrenzte Strukturierung vorliegt, und daß der betreffende Bereich nach wie vor potentiell qualitätsbeeinträchtigend ist.

Die Bereiche, die durch den Vergleich mit der Kantenschwelle im Block 62 aussortiert werden, sind beispielsweise solche Bereiche, die zwar einen scharf umgrenzten Rand haben, die jedoch innerhalb des Rands nicht vollständig flach sind, also eine Variation von Null haben, sondern zusätzlich innerhalb der scharfen Umgrenzung ebenfalls eine Vertiefung oder Erhöhung haben, die sanft ansteigt und wieder sanft abnimmt. Reifeneinstempelungen können eine derartige Struktur haben. Durch die Untersuchung der Nachbarpixel des Gebiets kann festgestellt werden, ob unmittelbar angrenzend eine hohe Variation war, so daß trotz der Tatsache, daß ein solches Gebiet bei der Untersuchung in der Einrichtung 52 als potentiell fehlerhaft eingestuft worden ist, dasselbe dennoch eine unkritische Soll-Strukturierung ist. Der Prozentsatz, also die Kantenschwelle, die zwischen 0 und 100% einstellbar wird, wird vorzugsweise in einem Bereich zwischen 80 und 100% liegen, wobei mit dieser Schwelle jedoch individuell auf den bestimmten Reifentyp eingegangen werden kann bzw. auf die Genauigkeit der optischen Erfassung.

Von den noch verbleibenden potentiell qualitätsbeeinträchtigenden Gebieten wird nunmehr in einem Schritt 66 der maximale Höhen- bzw. Tiefen-Wert berechnet. Darauf findet in einem Block 68 eine Vergleichsoperation der erhaltenen Werte mit einer Höhenschwelle oder einer Tiefenschwelle statt, wobei die Höhenschwelle und die Tiefenschwelle einen identischen Betrag oder unterschiedliche Beträge haben können, da der Fall auftreten kann, daß Beulen mit einer bestimmten Höhe kritischer sind als Einschnürungen mit derselben Höhe. Wird herausgefunden, daß die berechnete maximale Höhe/Tiefe eines Gebiets betragsmäßig größer als der Betrag der jeweiligen Schwelle ist, so werden diese entsprechenden Gebiete bei der weiteren Rechnung berücksichtigt. Wird jedoch festgestellt, daß die maximalen Höhen/Tiefen kleiner als die entsprechende Schwelle sind, so werden diese Bereiche als unterkritische klassifiziert. Sie stellen keine Fehlergebiete dar (Block 70), da sie zwar bisher einige Tests bestanden haben, jedoch ihre Höhe/Tiefe zu gering ist, als daß diese Unebenheit kritisch sein könnte für die Funktion des Reifens bzw. für die Funktion des Körpers, der durch die Oberflächenuntersuchung einer Qualitätsüberprüfung unterzogen wird.

In einem Schritt 72 wird dann eine Flächenberechnung der noch verbleibenden Gebiete durchgeführt, wobei Flächenberechnungen allgemein durch Aufsummieren der Pixel in einem Gebiet und dann durch Umrechnung der Vergrößerungs/Verkleinerungs-Faktoren der Optik durchgeführt werden.

Schließlich werden die potentiell qualitätsbeeinträchtigenden Gebiete, die nach dem Schritt 68 noch verblieben sind, also deren Fläche im Schritt 72 berechnet worden ist, mit einer zweiten Flächenschwelle verglichen, wobei, wenn deren Flächenwert kleiner als die zweite Flächenschwelle ist, dieselben als nicht problematisch eingestuft werden, also keinen Fehler darstellen (Block 76), während, wenn in dem Block 74 bestimmt wird, daß die Fläche eines Gebiets größer als die zweite Flächenschwelle ist, dieses Gebiet letztendlich als Fehlergebiet klassifiziert wird (Block 78). Wie es bereits erwähnt worden ist, können dann in einem Schritt 80 die Koordinaten und Ausdehnung des Fehlergebiets bzw., falls mehrere Gebiete problematisch sind, diese mehreren Fehlergebiete ausgegeben werden, um es einer manuellen Nachkontrolle zu ermöglichen, schnell die entsprechenden Stellen zu finden.

Es sei hier darauf hingewiesen, daß zum Zweck einer manuellen oder sonstigen Verifikation des gefundenen Fehlers eine Vorrichtung und ein Vefahren zum automatischen Auffinden bzw. Positionieren des Fehlers eingesetzt werden kann.

Zu diesem Zweck wird ein Meßsystem zur Ermittlung der Drehposition des Reifens (vorzugsweise ein Drehgeber) an die mechanische Rotationsachse des Reifens angebracht und die Meßwerte dieses Systems werden unmittelbar vor und nach oder auch während der Aufnahme des Höhenbildes des Reifens über eine geeignete Schnittstelle in den Meßrechner eingelesen. Dabei sollte der Reifen nicht ausgespannt werden bzw., falls er ausgespannt wird, wieder in der selben Winkelposition bezüglich der mechanischen Drehachse eingespannt werden.
Aufgrund der erreichten zeitlichen Synchronisation und der dadurch erreichten direkten Beziehung zwischen den Koordinaten des Höhenbildes und den Winkelmeßwerten kann die Winkelposition des gefundenen Fehlers berechnet und zur exakten automatischen Positionierung des Reifens verwendet werden.

Die Drehung der Reifenachse kann an einer vorher festgelegten Winkelposition der Prüfanlage und zu einem aufgrund der Fehlerkoordinaten vorausberechneten Zeitpunkt über ein elektrisches Signal an die Steuerung der Achse gestoppt werden.

Vorzugsweise arbeitet das Verfahren zum Auffinden der Fehlstelle automatisch.
Zur Verbesserung der Höhenmeßgenauigkeit kann optional die bezüglich den Fig. 1 und 2 beschriebene Iteration durchgeführt werden, indem nach dem Schritt 52 die Schritte 46, 48, 50, 52 iterativ wiederholt werden, wie es durch einen Iterationspfeil 82 angedeutet ist. Hierzu werden im Schritt 46 zum Liefern/Erzeugen des Referenzhöhenbildes nur noch diejenigen Objektbereiche herangezogen, die nicht potentiell qualitätsbeeinträchtigend sind, und die darüber hinaus keine Schriftbereiche sind, also einen hohen Gradienten haben. Die dann verbleibende lückenhafte dreidimensionale Darstellung beispielsweise des Reifens kann durch analytische (periodische oder aperiodische) Funktionen gefittet und ersetzt werden. Alternativ kann die gesamte Reifenform anhand der verbleibenden Objektgebiete analytisch gefittet werden. Alternativ kann auch eine Interpolation beispielsweise mittels kubischer Splines oder ähnlicher Verfahren eingesetzt werden.
Die Zahl der durchzuführenden Iterationen hängt von der gewünschten Meßgenauigkeit ab. Ein Abbruchkriterium kann beispielsweise derart definiert werden, daß sich die Koeffizienten oder die Differenz der absoluten Höhenwerte der gewölbten Reifenform aus nacheinanderfolgenden Iterationen weniger als eine bestimmte Schwelle unterscheiden, wie es durch einen mit "Iterationsschwelle" bezeichneten Block 84 in Fig. 3a schematisch dargestellt ist.

An dieser Stelle sei darauf hingewiesen, dass, im Rahmen des Schutzumfangs der Ansprüche, die Reihenfolge der einzelnen Schwellwertentscheidungen beliebig ist. Darüber hinaus würde prinzipiell auch eine einzige Flächenschwelle genügen. Wenn jedoch zwei Flächenschwellen verwendet werden (Block 56 und Block 74), so können auch Zwischenergebnisse über den Reifen erhalten werden, nämlich ob er Beulen bzw. Einschnürungen hat, und ob die Beulen unterkritisch sind, d. h. daß ihre Fläche zwischen der ersten und zweiten Flächenschwelle liegt. Selbstverständlich könnte die Flächenschwellenentscheidung beispielsweise vor der Kantenschwellenentscheidung oder aber vor der Höhenschwellenentscheidung (Block 68) stattfinden. Zur Minimierung des Rechenaufwands wird es jedoch bevorzugt, zunächst die Entscheidungen durchzuführen, mit denen eine möglichst große Anzahl der potentiell qualitätsbeeinträchtigenden Gebiete als nicht-kritisch klassifiziert werden, so daß die Liste der nach und nach zu untersuchenden potentiell qualitätsbeeinträchtigenden Gebiete möglichst schnell möglichst klein wird. Alternativ könnte auch die Reihenfolge der Schwellwertentscheidungen so gewählt werden, daß möglichst schnell ein fehlerhaftes Gebiet gefunden wird, was dazu führt, daß der Reifen ausgemustert wird. In diesem Fall ist es unerheblich, ob noch weitere fehlerhafte Gebiete vorhanden sind bzw. ob noch weitere potentiell fehlerhafte Gebiete vorhanden sind, da bereits ein fehlerhaftes Gebiet ausreicht, um den Reifen zu einem defekten Reifen zu machen.

Anschließend wird auf ein optisches System eingegangen, das vorzugsweise für die vorliegende Erfindung eingesetzt wird. Zunächst wird ein Lichtfächerstrahl (Laser mit spezieller asphärischen Linsenoptik, 30mW) auf die zu untersuchende Oberfläche gerichtet. Die diffus reflektierte Strahlung wird über ein geeignetes Linsensystem auf eine Sensorfläche projiziert. Aus der bekannten Geometrie der Meßanordnung wird aus der Lage der projizierten Linie auf der Sensorfläche die Form der bestrahlten Oberfläche berechnet.

Die Geometrie der Anordnung von Lichtfächerstrahl und Meßkamera sowie die Pixelauflösung der Kamera bestimmen die räumliche Auflösung der Messung in lateraler und vertikaler Richtung. Die Geometrie wird so gewählt, daß sowohl der zu untersuchende Reifenbereich auf dem Sensor abgebildet wird, d. h. 5 cm Meßbereich in radialer Richtung mit ca. 0,5 mm Auflösung, und daß gleichzeitig eine genügende Höhenauflösung von ca. 75 µm erreicht wird, um die zu detektierenden Fehlerstrukturen, die im Höhenbereich von >= 0,55 mm liegen, hinreichend genau darzustellen.

Die Ortsauflösung der Vermessung in tangentialer Richtung ist abhängig von der Bildwiederholrate der Bildkamera. Die tangentiale Ortsauflösung liegt bei 1 mm. Ein Reifen muß innerhalb von 1 sec geprüft werden. Daraus ergibt sich bei einem angenommenen Durchmesser des Prüfbereichs von beispielsweise 60 cm eine Meßrate von 1900 Hz. Speziell für diese Prüfaufgabe geeignete Sensoren werden von der Fa. IVP (Typ MAPP 2500 PCI) gefertigt. Mittels einer auf dem Sensorchip integrierten programmierbaren Rechnerarchitektur wird eine spaltenweise Bestimmung der Höheninformation durchgeführt, so daß pro aufgenommenem Sensorbild nur das Auswerteergebnis in Form von einer Zeile auf den Meßrechner übermittelt werden muß.

Die Lichtquellen/Kamera-Anordnung, welche für die vorliegende Erfindung eingesetzt werden kann, kann beispielsweise dieselbe sein, wie sie in der WO 00/25088 A1 beschrieben ist.

Eine geeignete Kamera hat typischerweise ein staubdichtes Gehäuse, wobei die Meßfenster mittels Luftspülung von Staub freigehalten werden. Der mit einer solchen Lichtquellen/Kamera-Anordnung realisierbare Höhenmeßbereich in z-Richtung liegt bei 39 mm. Die Höhenauflösung beträgt 75 µm.

Die Breite des Meßbereichs auf der Reifenflanke beträgt beispielsweise 80 mm.

## Patentansprüche

1. Vorrichtung zur Qualitätsüberprüfung eines Körpers mit einer Oberfläche, die eine durch Kanten begrenzte Strukturierung und eine im wesentlichen kantenfreie Unebenheit aufweist, wobei die Struktur keine Qualitätsbeeinträchtigung darstellt, und wobei die Unebenheit eine potentielle Qualitätsbeeinträchtigung darstellt, mit folgenden Merkmalen:
einer Einrichtung (10) zum Erzeugen einer Höhendarstellung der Oberfläche, wobei die Einrichtung (10) zum Erzeugen der Höhendarstellung der Oberfläche ausgebildet ist, um die Höhendarstellung der Oberfläche so zu erzeugen, dass die Höhendarstellung der Oberfläche die Strukturierung und die Unebenheit umfasst;
einer Einrichtung (12) zum Berechnen einer Variationsdarstellung aus der Höhendarstellung, wobei die Einrichtung (12) zum Berechnen der Variationsdarstellung aus der Höhendarstellung ausgebildet ist, um die Variationsdarstellung aus der Höhendarstellung durch Differenzieren der Höhendarstellung zu berechnen, derart, dass die erste Ableitung der Höhendarstellung erhalten wird, die die Variationsdarstellung darstellt, und derart, dass die Variationsdarstellung Variationen der Höhendarstellung umfasst, so dass an einer Grenze der Strukturierung eine hohe Variation erhalten wird, während an einer Grenze der Unebenheit eine geringe Variation erhalten wird; und
einer Einrichtung (14) zum Erfassen von Bereichen der Höhendarstellung, wobei die Einrichtung (14) zum Erfassen der Bereiche der Höhendarstellung ausgebildet ist, um einen vorbestimmten Variationsschwellwert einzusetzen, der kleiner als die hohe Variation und größer als die geringe Variation ist, und wobei die Einrichtung (14) zum Erfassen der Bereiche der Höhendarstellung ferner ausgebildet ist, um mittels einer Schwellwertentscheidung mit dem vorbestimmten Variationsschwellwert nur die Bereiche der Höhendarstellung als potentiell qualitätsbeeinträchtigende Bereiche zu erfassen die eine Variation aufweisen, die betragsmäßig kleiner als der vorbestimmter Variationsschwellwert ist.

2. Vorrichtung nach Anspruch 1, bei der die Einrichtung (14) zum Erfassen angeordnet ist, um nur solche Bereiche als potentiell qualitätsbeeinträchtigend zu erhalten, deren Höhe größer als ein vorbestimmter Detektionsschwellwert ist.

3. Vorrichtung nach Anspruch 1 oder 2, die ferner folgendes Merkmal aufweist:
eine Einrichtung (16) ausgebildet zum Untersuchen der potentiell qualitätsbeeinträchtigenden Bereiche der Höhendarstellung hinsichtlich ihrer Höhe oder Tiefe und/oder Fläche, um eine qualitätsbeeinträchtigende Unebenheit zu erfassen.

4. Vorrichtung nach einem der vorhergehenden Ansprüche, bei der die Oberfläche torusförmig ist und eine Wölbung und gegebenenfalls einen Seitenschlag aufweist, bei der die Einrichtung (10) zum Erzeugen einer Höhendarstellung der Oberfläche folgende Merkmale aufweist:
eine Einrichtung (30) ausgebildet zum Erzeugen einer dreidimensionalen Darstellung der Oberfläche;
eine Einrichtung (32) ausgebildet zum Liefern einer Referenzdarstellung der Oberfläche, wobei die Referenzdarstellung die Oberfläche ohne die Strukturierung und die Unebenheit wiedergibt; und
eine Einrichtung (34) ausgebildet zum Subtrahieren der Referenzdarstellung von der dreidimensionalen Darstellung, um eine ebene Höhendarstellung der Oberfläche des Körpers zu erhalten.

5. Vorrichtung nach Anspruch 3 oder 4, bei der die Einrichtung (16) ausgebildet zum Untersuchen folgendes Merkmal aufweist:
eine Einrichtung ausgebildet zum nicht-linearen zweidimensionalen Filtern der potentiell qualitätsbeeinträchtigenden Bereiche, um Artefakte oder geringfügige Bereiche als nicht-qualitätsbeeinträchtigend zu erkennen.

6. Vorrichtung nach einem der Ansprüche 3 bis 5, bei der die Einrichtung (16) ausgebildet zum Untersuchen angeordnet ist, um die Flächen der potentiell qualitätsbeeinträchtigenden Bereiche zu ermitteln (54), und um die ermittelten Flächen mit zumindest einer vorbestimmten Flächenschwelle zu vergleichen (56), um die potentiell qualitätsbeeinträchtigenden Bereiche als nicht-qualitätsbeeinträchtigend zu klassifizieren, deren Flächen kleiner als die vorbestimmte Flächenschwelle sind.

7. Vorrichtung nach Anspruch 6, bei der eine vorbestimmte Flächenschwelle für Erhöhungen und eine vorbestimmte Flächenschwelle für Vertiefungen vorgesehen sind.

8. Vorrichtung nach einem der Ansprüche 3 bis 7, bei der die Einrichtung (16) ausgebildet zum Untersuchen angeordnet ist, um für einen potentiell qualitätsbeeinträchtigenden Bereich einen prozentualen Anteil von angrenzenden Pixeln zu bestimmen (58), die eine Variation aufweisen, die betragsmäßig größer oder gleich dem vorbestimmten Variations-Schwellwert ist, und bei der die Einrichtung (16) ausgebildet zum Untersuchen ferner angeordnet ist, um den prozentualen Anteil mit einem vorbestimmten Kantenschwellwert zu vergleichen (52), wobei potentiell qualitätsbeeinträchtigende Bereiche mit einem prozentualen Anteil größer als dem Kantenschwellwert als nicht-qualitätsbeeinträchtigend klassifiziert werden.

9. Vorrichtung nach einem der Ansprüche 3 bis 8, bei der die Einrichtung (16) ausgebildet zum Untersuchen ferner angeordnet ist, um potentiell qualitätsbeeinträchtigende Bereiche mit einem vorbestimmten Höhenschwellwert zu vergleichen (68), um die Bereiche, deren Höhe kleiner als der vorbestimmte Höhenschwellwert ist, als nicht-qualitätsbeeinträchtigende Bereiche zu klassifizieren.

10. Vorrichtung nach einem der Ansprüche 3 bis 9, bei der die Einrichtung (16) ausgebildet zum Untersuchen angeordnet ist, um die Flächen von potentiell qualitätsbeeinträchtigenden Bereichen zu berechnen (72), und um die potentiell qualitätsbeeinträchtigenden Bereiche als qualitätsbeeinträchtigende Bereiche zu klassifizieren, deren Fläche größer als eine vorbestimmte Flächenschwelle (74) ist.

11. Vorrichtung nach einem der Ansprüche 4 bis 10, bei der die Einrichtung (32) ausgebildet zum Liefern einer Referenzdarstellung angeordnet ist, um eine langreichweitige nicht-lineare Filterung einer dreidimensionalen Darstellung des Körpers durchzuführen.

12. Vorrichtung nach Anspruch 11,
bei der die Einrichtung (32) ausgebildet zum Liefern einer Referenzdarstellung angeordnet ist, um in einer Iteration (82, 84) aus der dreidimensionalen Darstellung des Objekts, die durch die Einrichtung (14) zum Erfassen potentiell qualitätsbeeinträchtigender Bereiche zu eliminieren, um eine lückenhafte dreidimensionale Darstellung zu erhalten, und um die lückenhafte dreidimensionale Darstellung zu interpolieren oder durch eine analytische Funktion zu fitten, um die Referenzdarstellung der Oberfläche zu erhalten.

13. Vorrichtung nach einem der vorhergehenden Ansprüche, bei der die Höhendarstellung eine ebene Höhendarstellung ist.

14. Vorrichtung nach Anspruch 1, bei der die Höhendarstellung eine Höhenlinie einer Spur auf der Oberfläche ist, und bei der ein potentiell qualitätsbeeinträchtigender Bereich ein Abschnitt der Höhenlinie ist.

15. Vorrichtung nach einem der vorhergehenden Ansprüche, bei der der Körper ein Fahrzeugreifen ist, die Strukturierung eine Aufschrift auf dem Reifen aufweist, und die im wesentlichen kantenfreie Unebenheit eine Beule oder eine Einschnürung umfasst.

16. Vorrichtung nach einem der vorhergehenden Ansprüche, bei der die Einrichtung (10) zum Erzeugen einer Höhendarstellung ferner angeordnet ist, um bei einer Aufnahme der Oberfläche erzeugte Pixelartefakte zu eliminieren (44).

17. Verfahren zur Qualitätsüberprüfung eines Körpers mit einer Oberfläche, die eine durch Kanten begrenzte Strukturierung und eine im wesentlichen kantenfreie Unebenheit aufweist, wobei die Struktur keine Qualitätsbeeinträchtigung darstellt, und wobei die Unebenheit eine potentielle Qualitätsbeeinträchtigung darstellt, mit folgenden Schritten:
Erzeugen (10) einer Höhendarstellung der Oberfläche, wobei die Höhendarstellung der Oberfläche die Strukturierung und die Unebenheit umfasst;
Berechnen (12) einer Variationsdarstellung aus der Höhendarstellung, durch Differenzieren der Höhendarstellung, um die erste Ableitung der Höhendarstellung zu erhalten, die die Variationsdarstellung darstellt, wobei die Variationsdarstellung Variationen der Höhendarstellung umfasst, so dass an einer Grenze der Strukturierung eine hohe Variation erhalten wird, während an einer Grenze der Unebenheit eine geringe Variation erhalten wird; und
Erfassen (14) von Bereichen der Höhendarstellung, die eine Variation aufweisen, die betragsmäßig kleiner als ein vorbestimmter Variationsschwellwert ist, wobei der Variationsschwellwert kleiner als die hohe Variation und größer als die geringe Variation ist, so dass potentiell qualitätsbeeinträchtigende Bereiche erhalten werden, wobei der vorbestimmte Variationsschwellwert eingesetzt wird, und wobei mittels einer Schwellwertentscheidung mit dem vorbestimmten Variationsschwellwert nur die Bereiche der Höhendarstellung, die die Variation aufweisen, die betragsmäßig kleiner als der vorbestimmter Variationsschwellwert ist, als potentiell qualitätsbeeinträchtigende Bereiche erfasst werden.

## Claims

1. An apparatus for quality testing a body having a surface comprising a structuring bounded by edges and a substantially edge-free unevenness, wherein the structuring does not constitute a quality impairment, and wherein the unevenness constitutes a potential quality impairment, comprising:
a means (10) for generating a height representation of the surface, wherein the means (10) for generating the height representation of the surface is configured to generate the height representation of the surface, so that the height representation of the surface includes the structuring and the unevenness;
a means (12) for calculating a variation representation from the height representation, wherein the means (12) for calculating the variation representation from the height representation is configured to calculate the variation representation from the height representation by differentiating the height representation, so that the first derivative of the height representation which the variation representation represents is obtained, and so that the variation representation includes variations of the height representation, so that at a boundary of the structuring a high variation is obtained, whereas at a boundary of the unevenness a low variation is obtained; and
a means (14) for detecting regions of the height representation, wherein the means (14) for detecting the regions of the height representation is configured to use a predetermined variation threshold value which is lower than the high variation and greater than the low variation, and wherein the means (14) for detecting the regions of the height representation is further configured to detect, by means of a threshold value decision using the predetermined variation threshold value, only such regions of the height representation comprising a variation whose magnitude is smaller than the predetermined variation threshold value as potentially quality-affecting regions.

2. The apparatus according to claim 1, wherein the means (14) for detecting is arranged to obtain only such regions as potentially quality-affecting whose height is larger than a predetermined detection threshold value.

3. The apparatus according to claim 1 or 2, further comprising:
a means (16) configured for examining the potentially quality-affecting regions of the height representation regarding a height or depth and/or area in order to detect a quality-affecting unevenness.

4. The apparatus according to any of the preceding claims, wherein the surface is torus-shaped and comprises a doming and, if applicable, a side wobble, wherein the means (10) for generating a height representation of the surface comprises:
a means (30) configured for generating a three-dimensional representation of the surface;
a means (32) configured for providing a reference representation of the surface, wherein the reference representation reflects the surface without the structuring and the unevenness; and
a means (34) configured for subtracting the reference representation from the three-dimensional representation to obtain a planar height representation of the surface of the body.

5. The apparatus according to claim 3 or 4, wherein the means (16) configured for examining comprises:
a means configured for non-linear two-dimensional filtering of the potentially quality-affecting regions to detect artifacts or small regions as not being quality-affecting.

6. The apparatus according to any one of claims 3 to 5, wherein the means (16) configured for examining is configured to determine (54) the areas of the potentially quality-affecting regions and to compare (56) the determined areas to at least one predetermined area threshold, to classify the potentially quality-affecting regions as not being quality-affecting, whose areas are smaller than the predetermined area threshold.

7. The apparatus according to claim 6, wherein a predetermined area threshold for elevations and a predetermined area threshold for depressions are provided.

8. The apparatus according to any one of claims 3 to 7, wherein the means (16) configured for examining is arranged to determine (58) a proportional part of adjacent pixels for a potentially quality-affecting region comprising a variation whose magnitude is larger or equal to the predetermined variation threshold value, and wherein the means (16) configured for examining is further arranged to compare (52) the proportional part to a predetermined edge threshold value, wherein potentially quality-affecting regions with a proportional part larger than the edge threshold value are classified as not being quality-affecting.

9. The apparatus according to any one of claims 3 to 8, wherein the means (16) configured for examining is further arranged to compare (68) potentially quality-affecting regions to a predetermined height threshold value to classify the regions whose height is smaller than the predetermined height threshold value as not being quality-affecting regions.

10. The apparatus according to any one of claims 3 to 9, wherein the means (16) configured for examining is arranged to calculate (72) the areas of potentially quality-affecting regions and to classify the potentially quality-affecting regions as quality-affecting regions whose area is larger than a predetermined area threshold (74).

11. The apparatus according to any one of claims 4 to 10, wherein the means (32) configured for providing a reference representation is arranged to perform a long-range non-linear filtering of a three-dimensional representation of the body.

12. The apparatus according to claim 11,
wherein the means (32) configured for providing a reference representation is arranged to eliminate, in an iteration (82, 84), the potentially quality-affecting regions detected, by the means (14) for detecting potentially quality-affecting regions, from the three-dimensional representation of the object, to obtain an incomplete three-dimensional representation and to interpolate the incomplete three-dimensional representation or to fit the same by an analytical function to obtain the reference representation of the surface.

13. The apparatus according to any one of the preceding claims, wherein the height representation is a planar height representation.

14. The apparatus according to claim 1, wherein the height representation is a contour line of a track on the surface and wherein a potentially quality-affecting region is a section of the contour line.

15. The apparatus according to any one of the preceding claims, wherein the body is a vehicle tire, the structuring comprises an inscription on the tire and the substantially edge-free unevenness includes a bulge or a constriction.

16. The apparatus according to any one of the preceding claims, wherein the means (10) for generating a height representation is further arranged to eliminate (44) pixel artifacts generated in an image of the surface.

17. A method for quality testing a body having a surface comprising a structuring bounded by edges and a substantially edge-free unevenness, wherein the structuring does not constitute any quality impairment, and wherein the unevenness constitutes a potential quality impairment, comprising the following steps:
generating (10) a height representation of the surface, wherein the height representation of the surface includes the structuring and the unevenness;
calculating (12) a variation representation from the height representation, by differentiating the height representation, to obtain the first derivative of the height representation which the variation representation represents, wherein the variation representation includes variations of the height representation, so that at a boundary of the structuring a high variation is obtained, whereas at a boundary of the unevenness a low variation is obtained; and
detecting (14) regions of the height representation comprising a variation whose magnitude is smaller than a predetermined variation threshold value, wherein the variation threshold value is lower than the high variation and greater than the low variation, so that potentially quality-affecting regions are obtained, wherein the predetermined variation threshold value is used, and wherein, by means of a threshold value decision using the predetermined variation threshold value, only such regions of the height representation comprising the variation whose magnitude is smaller than the predetermined variation threshold value are detected as potentially quality-affecting regions.

## Revendications

1. Dispositif pour contrôler la qualité d'un corps avec une surface qui présente une structuration délimitée par des bords et une irrégularité sensiblement sans bords, dans lequel la structuration ne représente pas une détérioration de la qualité, et dans lequel l'irrégularité représente une détérioration potentielle de la qualité, aux caractéristiques suivantes:
un moyen (10) destiné à générer une représentation en relief de la surface, où le moyen (10) destiné à générer la représentation en relief de la surface est conçu pour générer la représentation en relief de la surface de sorte que la représentation en relief de la surface comporte la structuration et l'irrégularité;
un moyen (12) destiné à calculer une représentation de variation à partir de la représentation en relief, où le moyen (12) destiné à calculer la représentation de variation à partir de la représentation en relief est conçu pour calculer la représentation de variation à partir de la représentation en relief en différenciant la représentation en relief de sorte que soit obtenue la première dérivation de la représentation en relief qui représente la représentation de variation, et de sorte que la représentation de variation comporte des variations de la représentation en relief de sorte que soit obtenue, à une limite de la structuration, une haute variation, tandis qu'à une limite de l'irrégularité soit obtenue une faible variation; et
un moyen (14) destiné à détecter les zones de la représentation en relief, où le moyen (14) destiné à détecter les zones de la représentation en relief est conçu pour utiliser une valeur de seuil de variation prédéterminée qui est inférieure à la haute variation et supérieure à la faible variation, et où le moyen (14) destiné à détecter les zones de la représentation en relief est par ailleurs conçu pour ne détecter, à l'aide d'une décision de valeur de seuil avec la valeur de seuil de variation prédéterminée, comme zones qui détériorent potentiellement la qualité que les zones de la représentation en relief qui présentent une variation qui est en quantité plus faible que la valeur de seuil de variation prédéterminée.

2. Dispositif selon la revendication 1, dans lequel le moyen (14) destiné à détecter est aménagé de manière à n'obtenir comme zones qui détériorent potentiellement la qualité que les zones dont la hauteur est supérieure à une valeur de seuil de détection prédéterminée.

3. Dispositif selon la revendication 1 ou 2, présentant par ailleurs la caractéristique suivante:
un moyen (16) conçu pour examiner les zones qui détériorent potentiellement la qualité de la représentation en relief en ce qui concerne leur hauteur ou profondeur et/ou surface pour détecter une irrégularité qui détériore la qualité.

4. Dispositif selon l'une des revendications précédentes, dans lequel la surface est toroïdale et présente une courbure et éventuellement un voile latéral, dans lequel le moyen (10) destiné à générer une représentation en relief de la surface présente les caractéristiques suivantes:
un moyen (30) conçu pour générer une représentation tridimensionnelle de la surface;
un moyen (32) conçu pour fournir une représentation de référence de la surface, où la représentation de référence reproduit la surface sans la structuration et l'irrégularité; et
un moyen (34) conçu pour soustraire la représentation de référence de la représentation tridimensionnelle pour obtenir une représentation en relief plane de la surface du corps.

5. Dispositif selon la revendication 3 ou 4, dans lequel le moyen (16) conçu pour examiner présente la caractéristique suivante:
un dispositif conçu pour le filtrage bidimensionnel non linéaire des zones qui détériorent potentiellement la qualité pour identifier les artefacts ou les zones réduites comme zones qui ne détériorent pas la qualité.

6. Dispositif selon l'une des revendications 3 à 5, dans lequel le moyen (16) conçu pour examiner est aménagé pour déterminer les surfaces des zones qui détériorent potentiellement la qualité (54), et pour comparer les surfaces déterminées avec au moins un seuil de surface prédéterminé (56), pour classifier comme zones qui ne détériorent pas potentiellement la qualité les zones qui détériorent potentiellement la qualité dont les surfaces sont plus petites que le seuil de surface prédéterminé.

7. Dispositif selon la revendication 6, dans lequel sont prévus un seuil de surface prédéterminé pour les élévations et un seuil de surface prédéterminé pour les creux.

8. Dispositif selon l'une des revendications 3 à 7, dans lequel le moyen (16) conçu pour examiner est aménagé pour déterminer (58), pour une zone qui détériore potentiellement la qualité, une part en pourcentage de pixels adjacents qui présentent une variation qui est en quantité supérieure ou égale à la valeur de seuil de variation prédéterminée, et dans lequel le moyen (16) conçu pour examiner est par ailleurs aménagé pour comparer (52) la part en pourcentage avec une valeur de seuil de bord prédéterminée, dans lequel les zones qui détériorent potentiellement la qualité à part en pourcentage supérieure à la valeur de seuil de bord sont classifiées comme ne détériorant pas la qualité.

9. Dispositif selon l'une des revendications 3 à 8, dans lequel le moyen (16) conçu pour examiner est par ailleurs aménagé pour comparer les zones qui détériorent potentiellement la qualité avec une valeur de seuil de hauteur prédéterminée (68) pour classifier les zones dont la hauteur est inférieure à la valeur de seuil de hauteur prédéterminée comme zones qui ne détériorent pas potentiellement la qualité.

10. Dispositif selon l'une des revendications 3 à 9, dans lequel le moyen (16) conçu pour examiner est aménagé pour calculer (72) les surfaces des zones qui détériorent potentiellement la qualité, et pour classifier comme zones qui détériorent la qualité les zones qui détériorent potentiellement la qualité dont la surface est supérieure à un seuil de surface prédéterminé (74).

11. Dispositif selon l'une des revendications 4 à 10, dans lequel le moyen (32) conçu pour fournir une représentation de référence est aménagé pour effectuer un filtrage non linéaire à longue portée d'une représentation tridimensionnelle du corps.

12. Dispositif selon la revendication 11,
dans lequel le moyen (32) conçu pour fournir une représentation de référence est aménagé pour éliminer, dans une itération (82, 84), de la représentation tridimensionnelle de l'objet les zones qui détériorent potentiellement la qualité déterminées par le moyen (14) destiné à détecter pour obtenir une représentation tridimensionnelle fragmentaire et pour interpoler la représentation tridimensionnelle fragmentaire ou pour l'ajuster par une fonction analytique pour obtenir la représentation de référence de la surface.

13. Dispositif selon l'une des revendications précédentes, dans lequel la représentation en relief est une représentation en relief plane.

14. Dispositif selon la revendication 1, dans lequel la représentation en relief est une ligne de relief d'une piste sur la surface, et dans lequel une zone qui détériore potentiellement la qualité est un segment de la ligne de relief.

15. Dispositif selon l'une des revendications précédentes, dans lequel le corps est un pneu de véhicule, la structuration présente une inscription sur le pneu, et l'irrégularité sensiblement sans bord comporte une bosse ou un rétrécissement.

16. Dispositif selon l'une des revendications précédentes, dans lequel le moyen (10) destiné à générer une représentation en relief est par ailleurs aménagé pour éliminer les artefacts de pixels générés lors de la prise de vue de la surface (44).

17. Procédé pour contrôler la qualité d'un corps avec une surface qui présente une structuration délimitée par des bords et une irrégularité sensiblement sans bords, dans lequel la structuration ne représente pas une détérioration de la qualité et dans lequel l'irrégularité représente une détérioration potentielle de la qualité, aux étapes suivantes consistant à:
générer (10) une représentation en relief de la surface, où la représentation en relief de la surface comporte la structuration et l'irrégularité;
calculer (12) une représentation de variation à partir de la représentation en relief, en différenciant la représentation en relief pour obtenir la première dérivation de la représentation en relief qui représente la représentation de variation, où la représentation de variation comporte des variations de la représentation en relief de sorte que soit obtenue, à une limite de la structuration, une haute variation, tandis qu'à une limite de l'irrégularité soit obtenue une faible variation; et
détecter (14) les zones de la représentation en relief qui présentent une variation qui est inférieure en quantité à une valeur de seuil de variation prédéterminée, où la valeur de seuil de variation est inférieure à la haute variation et supérieure à la faible variation, de sorte que soient obtenues des zones qui détériorent potentiellement la qualité, et où ne sont ne détectées, à l'aide d'une décision de valeur de seuil avec la valeur de seuil de variation prédéterminée, comme zones qui détériorent potentiellement la qualité que les zones de la représentation en relief qui présentent la variation qui est en quantité plus faible que la valeur de seuil de variation prédéterminée.
